## Europäisches Patentamt

## European Patent Office

(11) Publication number: **0 178 368**
**B1**

## Office européen des brevets

(12) **EUROPEAN PATENT SPECIFICATION**

(45) Date of publication of patent specification: **14.11.90**

(51) Int. Cl.⁵: **G 01 D 18/00, G 01 L 27/00**

(21) Application number: **85100922.5**

(22) Date of filing: **30.01.85**

(54) **Process variable transmitter and method for correcting its output signal.**

| | |
|---|---|
| (30) Priority: **02.02.84 US 576494** | (73) Proprietor: **HONEYWELL INC.**<br>**Honeywell Plaza**<br>**Minneapolis Minnesota 55408 (US)** |
| (43) Date of publication of application:<br>**23.04.86 Bulletin 86/17** | (72) Inventor: **Malloy, John R.**<br>**deceased (US)**<br>Inventor: **Olsen, Arthur M.**<br>**Newman Road, MR-1**<br>**Pennsburg Pennsylvania 18073 (US)** |
| (45) Publication of the grant of the patent:<br>**14.11.90 Bulletin 90/46** | |
| (84) Designated Contracting States:<br>**DE FR GB IT NL** | (74) Representative: **Rentzsch, Heinz et al**<br>**Honeywell Europe S.A. Holding KG Patent- und**<br>**Lizenzabteilung Kaiserleistrasse 55**<br>**D-6050 Offenbach am Main (DE)** |
| (56) References cited:<br>**EP-A-0 097 479**<br>**GB-A-2 047 412**<br>**GB-A-2 065 890** | |

Courier Press, Leamington Spa, England.

## Description

The invention relates to process variable transmitters, and it is an object of the present invention to provide an improved method for correction of the process variable transmitter output signal with respect to environmental influences, such as pressure, temperature, etc.

A process variable transmitter according to the precharacterizing portion of claim 4 and a method for its correction in accordance with the general portion of claim 1 are described in EP—A 0 097 479. This transmitter senses a process variable such as pressure and produces an output signal in a predetermined range of 4 to 20 mA independently from the actual range of the input signal. The conversion is achieved by a microcomputer using a stored processing equation.

GB—A 20 47 412 describes a method for linearizing the electrical output signal of a transducer. It uses a development in series of the non-linear characteristic curve of the sensor such as a thermocouple or resistance thermometer. The coefficients of this development are known from calculations by the National Bureau of Standards, but all those coefficients have constant values for a given thermocouple or resistance thermometer.

The present invention, however, aims for simultaneous correction of environmental influences on the conversion of the analog input signal obtained from the process variable sensor into a digital representation thereof at the output, which afterwards might be re-converted into an analog control signal. This object is achieved by the method as characterized in claim 1, and an apparatus using this method is characterized in claim 4. Preferred embodiments and modifications are described in the dependent claims.

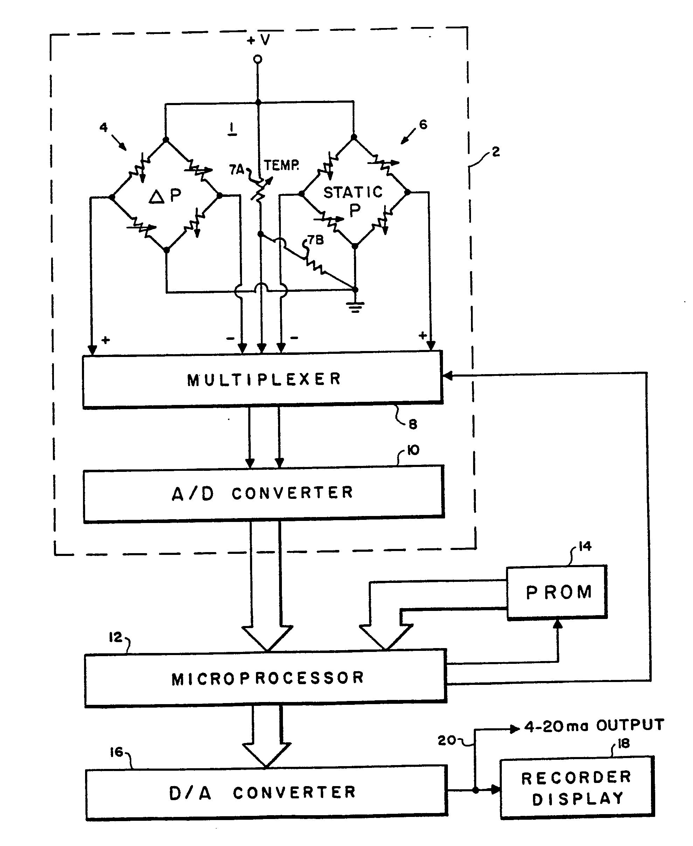

A better understanding of the present invention may be had when the following description is read in connection with the accompanying drawing, in which the single figure is a block diagram of a pressure transmitter with associated signal handling apparatus.

The pressure transmitter 1 may include a housing 2 for providing an enclosure for a pair of differential and static pressure sensing bridge circuits 4 and 6, respectively, which together form the pressure sensor. The housing 2 would, of course, be arranged to be connected to a source of pressure to be measured to enable the pressure to affect the bridge circuits 4 and 6 in a manner well-known in the art. The bridge circuits 4 and 6 may advantageously be formed as piezo-resistive elements on a silicon surface. A temperature sensitive element including a temperature sensitive resistor 7A connected in series with a fixed resistor 7B is also included in the transmitter 1 to produce an output signal which is affected primarily by the environmental temperature of the transmitter 1. The bridge circuits 4 and 6 and the resistors 7A, 7B are powered by a source of direct current voltage +V while the output of each of the bridge circuits 4, 6 and the output of the temperature sensitive circuit 7A, 7B taken from the junction between resistors 7A, 7B are connected to corresponding inputs of a signal multiplexer 8. The output of the multiplexer 8 is applied to an analog-to-digital (A/D) converter 10. The digital output of the converter 10 representative of a converted output from the multiplexer 8 is conducted out of the housing 2 via a fluid-tight electrical feedthrough (not shown) and is applied to a microprocessor 12.

The microprocessor 12 is also connected in a conventional manner to interrogate a non-volatile memory, e.g., PROM 14, which is used to store a specific characterization equation individually developed for the pressure transmitter 1, as described more fully hereinafter, to be used for correcting, e.g., concurrently linearizing and compensating for static pressure and temperature, the output from the multiplexer 8. A digital output from the microprocessor 12 representative of the pressure sensed by the pressure transmitter 1 is applied to a digital-to-analog (D/A) converter 16. The output of the D/A converter 16 may be applied to a recorder or other display device 18 and is used as a conventional 4—20 mA output which is transmitted on an output line 20 to associated process control equipment.

### Mode of operation

During a manufacturing testing of the process variable sensor, e.g., the pressure transmitter 1 using the pressure sensing bridges 4, 6, and the temperature sensor 7 a characterization equation, which describes the individual performance of the transmitter 1 as a polynomial equation is stored in the memory 14. The individualized characterization equation for each transmitter 1 may be developed by a separate manufacturing testing computer using a conventional least squares curve fitting technique, i.e., to produce a curve to fit measured data, utilizing samples of the output from the converter 10 for a predetermined range of pressure and temperature inputs to the pressure bridges 4, 6 and the temperature sensor 7. For example, a matrix of 264 data points is obtained from the differential pressure ($\Delta P$) sensing bridge 4, the static pressure (SP) sensing bridge 6 and the temperature sensor 7A to correspond to the full range of environmental conditions of differential pressure, static pressure and temperature to which the transmitter 1 would be subject during normal operation. A typical range of test points would include eight temperatures, eleven differential pressures (with one being zero) and three static pressure pressures (including zero static pressure). At each combination of test conditions, the outputs of the three sensors 4, 6, 7 are recorded to obtain 94 data points which are extrapolated to produce the 264 data point matrix.

In general, the process variable pressure (PV) is a function of the output of the differential pressure ($\Delta P$) measuring sensor 4 (P), the static pressure (SP) measuring sensor 6 (S) and the temperature (TEMP) measuring sensor 7A (T), i.e., PV=f(P,S,T). Additionally, using the aforesaid sensor element construction, it is also seen that:

P=f (PV, SP, TEMP)

S=f (PV, SP, TEMP)

T=f (PV, SP, TEMP)=f (TEMP)

The generalized characterization equation is in the form of $PV = A_0 + A_1 P + A_2 P^2 \ldots + A_i P^i$ where $A_i = f(S,T)$, where

$$A_i = S^0 [a_{0i} + a_{1i} T + a_{2i} T^2 + \ldots + a_{ni} T^n]$$

$$+ S^1 [b_{0i} + b_{1i} T + b_{2i} T^2 + \ldots + b_{ni} T^n]$$

$$+$$

$$\cdot$$

$$\cdot$$

$$\cdot$$

$$+ S^m [w_{0i} + w_{1i} T + w_{2i} T^2 + \ldots w_{ni} T^n]$$

and as a practical limit $i \leq 5$, $n \leq 7$, $m \leq 2$. This produces a theoretical universe of $(i+1)(n+1)(m+1) = 144$ terms. The polynomial for a specific transmitter is made up of a unique subset of the universe of terms. The data identifying which terms comprise the polynomial for a specific transmitter along with the corresponding unique coefficients are stored in the PROM 14 to be used to solve for PV each set of readings from the sensors 4, 6, 7A during the use of the transmitter 1 as a pressure transmitter. Thus, the resulting characterization equation can then be used by the microprocessor 12 to modify the digital word outputs from the converter 10 representative of the sensor outputs to provide a corrected digital output. The digital output of the microprocessor 12 provides a digital word representation of the sensed pressure to the D/A converter 16 for conversion to an analog output signal e.g., a 4—20 mA standard signal.

As discussed above, the characterization equation is unique to each pressure transmitter and is stored in the memory 14 at the time of manufacture of the transmitter 1. The use of such individualized data provides a means for effecting a nonlinearity correction of the sensed pressure data. Further, the stored correction data is insensitive to the environmental conditions that produce the need for such a correction operation. The use of such a characterization equation provides a significant improvement in the accuracy of the pressure measurement by an order of magnitude. Concurrently, the gain in precision and stability of the nonlinearity correction allows a "turndown" ratio as great as 400 to 1 for the pressure transmitter whereby the transmitter that is rated for a certain pressure span can be used at a much smaller pressure span anywhere in the maximum span range, e.g., the transmitter can be turned down from a 400 inches (10 m) of $H_2O$ to 1 inch (25 mm) of $H_2O$. This enables the transmitter to cover a much wider differential pressure range to reduce the number of transmitters needed to cover a total differential pressure range. Thus, the reduction in the number of different transmitter models that would have to be either manufactured or stored as spare parts would result in a substantial saving over conventional pressure transmitters.

Modifications of the physical arrangement of the elements shown in the single figure illustration may be used in a particular application of the invention without departing from the scope of the invention. For example, the microprocessor 12, the PROM 14 and the D/A converter 16 may be included in the housing 2 with only the output line 20 penetrating the housing 2 to provide contact with the associated process control and/or display equipment. Further, the apparatus within the housing 2 may be powered by a source of direct current which may be supplied over the same output line 20 on which the 4—20 mA output signal is transmitted. Such a powering of the circuit within the housing 2 by the power obtained from the same electrical wires used to carry the output signal is well-known in the art.

The invention is not restricted to pressure transmitters as shown in the drawing. It can be used also for any other kind of sensors and transmitters, in particular process variable transmitters. It can correct a humidity sensor with respect to temperature and/or pressure or calibrate a temperature sensor in relation to supply voltage. It can be applied to optical, acoustical or any other sensors and/or transmitters.

## Claims

1. A method for correcting the output signal of a process variable transmitter comprising the steps of:

a) converting the analog output signal of the process variable transmitter into a digital representation thereof;

b) storing characterization values in a memory;

c) supplying said characterization values and said digital representation of the measured process variable to a digital computer for computing a digital output signal corrected in accordance with said characterization values; characterized by

d) storing the characterization values as a characterization equation in the form of a polynomial

$$PV = A_0 + A_1 P + A_2 P^2 + \ldots + A_i P^i,$$

where
PV is the corrected process variable signal and $A_i = f(S,T)$ with

$$A_i = S^0 (a_{0i} + a_{1i} T + a_{2i} T^2 + \ldots + a_{ni} T^n)$$

$$+ S^i (b_{0i} + b_{1i} T + b_{2i} T^2 + \ldots + b_{ni} T^n)$$

$$+ S^m (w_{0i} + w_{1i} T + w_{2i} T^2 + \ldots w_{ni} T^n);$$

with

P being the non-corrected process variable signal provided by said process variable sensor, e.g. a differential pressure sensor (4);

S being the output signal of a first environmental condition responsive sensor (6), such as a static pressure sensor, and T being the output signal of a second environmental condition responsive sensor (7) such as a temperature sensor;

e) measuring first and second environmental conditions of said process variable sensor; and

f) correcting the output signal of said converter in accordance with the characterization equation with respect to the measured environmental conditions.

2. A method according to claim 1, characterized by the further step of converting the digital output from the digital computer into an analog control signal.

3. A method according to claim 1 or 2, characterized in that $i \leq 5$.

4. A process variable transmitter comprising

a) an A/D converter (10);

b) input means (8) connecting said converter to a process variable sensor (4);

c) a non-volatile memory (14) including characterization values stored therein;

d) a digital computer (12) connected to said converter (10) and to said memory (14) for changing the output signals of said A/D converter in accordance with said stored characterization values; characterized in that

e) the input means (8) includes further inputs connected to sensors (6, 7) responding to environmental conditions of said process variable sensor (4);

f) the memory stores a characterization equation in the form of a polynomial

$$PV = A_0 + A_1 P + A_2 P^2 + \ldots + A_i P^i,$$

where

PV is the corrected process variable signal and $A_i = f(S,T)$ and;

$$A_i = S^0(a_{0i} + a_{1i}T + a_{2i}T^2 + \ldots + a_{ni}T^n)$$
$$+ S^i(b_{0i} + b_{1i}T + b_{2i}T^2 + \ldots + b_{ni}T^n)$$
$$+$$
$$+ S^m(w_{0i} + w_{1i}T + w_{2i}T^2 + \ldots w_{ni}T^n);$$

with

P being the non-corrected process variable signal provided by said process variable sensor, e.g. a differential pressure sensor (4);

S being the output signal of a first environmental condition responsive sensor (6), such as a static pressure sensor, and

T being the output signal of a second environmental condition responsive sensor (7) such as a temperature sensor;

g) the digital computer (12) computes a digital output signal representative of the process variable sensor output signal corrected in accordance with the stored characterization equation with respect to said environmental conditions.

5. A transmitter according to claim 4, characterized by a digital-to-analog converter (16) for converting the digital output signal of said computer (12) into an analog output signal, preferably a 4 to 20 mA standard control signal.

6. A transmitter according to claim 4 or 5, characterized in that $i \leq 5$.

7. Transmitter according to claim 6, characterized in that $n \leq 7$ and $m \leq 2$.

**Patentansprüche**

1. Verfahren zur Korrektur des Ausgangssignals eines Meßwertumformers, bestehend aus den Schritten:

a) Umsetzen des analogen Ausgangssignals des Meßwertumformers in eine digitale Darstellung;

b) Speichern von Kennwerten in einem Speicher;

c) Eingabe der Kennwerte und der digitalen Darstellung der gemessenen Prozeßgröße in einen Digitalrechner zwecks Berechnung eines entsprechend den Kennwerten korrigierten Ausgangssignals; gekennzeichnet durch

d) Speichern der Kennwerte als Kenngleichung in Form eines Polynoms

$$PV = A_0 + A_1 P + A_2 P^2 + \ldots + A_i P^i,$$

wobei

PV das korrigierte Meßgrößensignal und $A_i = f(S,T)$ ist, mit

$$A_i = S^0(a_{0i} + a_{1i}T + a_{2i}T^2 + \ldots + a_{ni}T^n)$$
$$+ S^1(b_{0i} + b_{1i}T + b_{2i}T^2 + \ldots + b_{ni}T^n)$$
$$+$$
$$+ S^m(w_{0i} + w_{1i}T + w_{2i}T^2 + \ldots w_{ni}T^n);$$

und

P das für Meßwertfühler, z.B. einem Differenzdruckfühler (4) gelieferte, unkorrigierte Meßgrößensignal ist,

S das Ausgangssignal eines ersten auf Umgebungseinflüsse ansprechenden Fühlers (6), etwa eines Fühlers für statischen Druck, und T das Ausgangssignal eines zweiten auf Umgebungseinflüsse ansprechenden Fühlers (7), z.B. eines Temperaturfühlers ist;

e) Messen der ersten und zweiten Umgebungseinflüsse des Meßwertumformers; und

f) Korrigieren des Ausgangssignals des Umformers entsprechend der Kenngleichung in bezug auf die gemessenen Umgebungseinflüsse.

2. Verfahren nach Anspruch 1, gekennzeichnet durch den weiteren Schritt der Umsetzung des digitalen Ausgangssignals des Digitalrechners in ein analoges Steuersignal.

3. Verfahren nach Anspruch 1 oder 2, dadurch gekennzeichnet, daß i≤5.

4. Meßwertumformer mit

a) einem Analog/Digital-Umsetzer (10);

b) einer Eingangsschaltung (8) zum Anschluß an einen Meßgrößenfühler (4);

c) einem nicht-flüchtigen Speicher (14) mit darin gespeicherten Kennwerten;

d) einem an den Umsetzer (10) und den Speicher (14) angeschlossenen Digitalrechner (12) zur Änderung der Ausgangssignale des A/D-Umsetzers entsprechend den gespeicherten Kennwerten; dadurch gekennzeichnet, daß

e) die Eingangsschaltung (8) weitere Eingänge aufweist, welche an auf Umgebungseinflüsse des Meßgrößenfühlers (4) ansprechende Fühler (6, 7) angeschlossen sind;

f) der Speicher eine Kenngleichung in Form eines Polynoms speichert

$$PV = A_0 + A_1 P + A_2 P^2 + \ldots + A_i P^i,$$

wobei

PV das korrigierte Meßgrößensignal und $A_i = f(S,T)$ ist, mit

$$A_i = S^0(a_{0i} + a_{1i}T + a_{2i}T^2 + \ldots + a_{ni}T^n)$$

$$+ S^1(b_{0i} + b_{1i}T + b_{2i}T^2 + \ldots + b_{ni}T^n)$$

$$+$$

$$+ S^m(w_{0i} + w_{1i}T + w_{2i}T^2 + \ldots w_{ni}T^n);$$

und

P das für Meßwertfühler, z.B. einem Differenzdruckfühler (4) gelieferte, unkorrigierte Meßgrößensignal ist,

S das Ausgangssignal eines ersten auf Umgebungseinflüsse ansprechenden Fühlers (6), etwa eines Fühlers für statischen Druck, und T das Ausgangssignal eines zweiten auf Umgebungseinflüsse ansprechenden Fühlers (7), z.B. eines Temperaturfühlers ist;

g) der Digitalrechner (12) ein digitales Ausgangssignal berechnet, welches dem entsprechend der Kenngleichung hinsichtlich der Umgebungseinflüsse korrigierten Ausgangssignal des Meßgrößenfühlers entspricht.

5. Umformer nach Anspruch 4, gekennzeichnet durch einen Digital/Analog-Umsetzer (16) zum Umsetzen des digitalen Ausgangssignals des Rechners (12) in ein analoges Ausgangssignal, vorzugsweise in ein 4 bis 20 mA Standardregelsignal.

6. Umformer nach Anspruch 4 oder 5, dadurch gekennzeichnet, daß i≤5.

7. Umformer nach Anspruch 6, dadurch gekennzeichnet, daß n≤7 und m≤2.

## Revendications

1. Procédé pour corriger le signal de sortie d'un transmetteur d'une variable de processus comprenant les étapes consistant à:

a) convertir le signal de sortie analogique du transmetteur de variable de processus en une représentation numérique de celui-ci,

b) stocker les valeurs caractéristiques dans une mémoire,

c) appliquer lesdites valeurs caractéristiques et ladite représentation numérique de la variable de processus mesurée à un calculateur numérique en vue de calculer un signal de sortie numérique corrigé selon lesdites valeurs caractéristiques, caractérisé par les étapes consistant à:

d) stocker les valeurs caractéristiques en tant qu'équation caractéristique sous la forme d'un polynome

$$PV = A_0 + A_1 p + A_2 p^2 + \ldots + A_i p^i$$

dans lequel,

PV est le signal de variable de processus corrigé, et

$A_i = f(ST)$ avec

$$A_i = S^0(a_{01} + a_{1i}T + a_{21}T^2 + \ldots + a_{n1}T^n)$$

$$+ S^1(b_{01} + B_{1i}T + b_{21}T^2 + \ldots b_{n1}T^n)$$

$$+$$

$$+ S^m(w_{01} + w_{11}T + w_{21}T^2 + \ldots w_{n1}T^n)$$

avec P étant le signal de variable de processus non corrigé fourni par ledit capteur de variable de processus, par exemple un capteur de pression différentielle (4),

S étant le signal de sortie d'un premier capteur sensible à une condition d'environnement (6) tel qu'un capteur de pression statique, et T étant le signal de sortie d'un second capteur (7) sensible à une condition d'environnement tel qu'un capteur de température,

e) mesurer les première et seconde conditions d'environnement dudit capteur de variable de processus, et

f) corriger le signal de sortie dudit convertisseur selon l'équation caractéristique relativement aux conditions d'environnement mesurées.

2. Procédé selon la revendication 1, caractérisé par l'étape complémentaire consistant à convertir la sortie numérique issue du calculateur numérique en un signal de commande analogique.

3. Procédé selon l'une des revendications 1 ou 2, caractérisé en ce que i est ≤5.

4. Transmetteur de variable de processus comprenant:

a) un convertisseur analogique-numérique (10),

b) des moyens d'entrée (8) reliant ledit convertisseur à un capteur de variable de processus (4),

c) une mémoire non volatile (14) comprenant les valeurs caractéristiques stockées dans celle-ci,

d) un calculateur numérique (12) relié audit convertisseur (10) et à ladite mémoire (14) pour modifier les signaux de sortie dudit convertisseur analogique-numérique selon les valeurs caractéristiques stockées, caractérisé en ce que:

e) les moyens d'entrée (8) comprennent d'autres entrées reliées aux capteurs (6, 7) sensibles au conditions d'environnement dudit capteur de variable de processus (4),

f) la mémoire stocke une équation caractéristique sous la forme d'un polynome

$$PV = A_0 + A_1 p + A_2 p^2 + \ldots + A_l p^l$$

dans lequel:

PV est le signal de variable de processus corrigé, et

$A_l = f(ST)$ et,

$$A_l = S^0(a_{0i} + a_{1i}T + a_{2i}T^2 + \ldots + a_{ni}T^n)$$

$$+ S^1(b_{0i} + b_{1i}T + b_{2i}T^2 + \ldots + b_{ni}T^n)$$

$$+$$

$$+ S^m(w_{0i} + w_{1i}T + w_{2i}T^2 + \ldots w_{ni}T^n);$$

avec P étant le signal de variable de processus non corrigé fourni par ledit capteur de variable de processus, par example un capteur de pression différentielle (4),

S étant le signal de sortie d'un premier capteur (6) sensible à une condition d'environnement, tel qu'un capteur de pression statique, et

T étant le signal de sortie d'un second capteur (7) sensible à une condition d'environnement, tel qu'un capteur de température,

g) le calculateur numérique (12) calcule un signal de sortie numérique indicatif du signal de sortie du capteur de variable de procédé corrigé selon l'équation caractéristique stockée par rapport auxdites conditions d'environnement.

5. Transmetteur selon la revendication 4, caractérisé par un convertisseur numérique-analogique (16) pour convertir le signal de sortie numérique dudit calculateur (12) en un signal de sortie analogique, de préférence un signal de commande standard de 4 à 20 mA.

6. Transmetteur selon l'une des revendications 4 ou 5, caractérisé en ce que i est ≤5.

7. Transmetteur selon la revendication 6, caractérisé en ce que n est ≤7 et m est ≤2.